# EUROPÄISCHE PATENTSCHRIFT

(11) **EP 2 147 587 B1**
(45) Veröffentlichungstag und Bekanntmachung des Hinweises auf die Patenterteilung: **15.06.2011**
(21) Anmeldenummer: 09008219.9
(22) Anmeldetag: 23.06.2009
(51) Int. Cl.: A01B 59/06

(54) **Landmaschine**
Agricultural machine
Machine agricole

(30) Priorität: 23.07.2008 DE 102008034311
(43) Veröffentlichungstag der Anmeldung: 27.01.2010
(73) Patentinhaber: Alois Pöttinger Maschinenfabrik Ges. m.b.H., 4710 Grieskirchen (AT)
(72) Erfinder: Pöttinger, Klaus, Dipl.-Ing., 4710 Grieskirchen (AT); Pfeneberger, Markus, 4723 Natternbach (AT)
(74) Vertreter: Thoma, Michael

(56) Entgegenhaltungen:
- EP-A- 0 655 186
- DE-A1- 4 128 585

## Beschreibung

Die vorliegende Erfindung betrifft eine Landmaschine vorzugsweise in Form einer Heuwerbungsmaschine wie Zetter oder Schwader, mit einem Anbaubock, der mittels einer Dreipunktanlenkung an einen Schlepper anbaubar ist sowie einem Arbeitsaggregat, das mittels eines am Anbaubock befestigten Trägerelements an dem Anbaubock gelagert ist.

Bei landwirtschaftlichen Anbaugeräten, die über einen Anbaubock am Schlepper gelagert werden und durch Anheben des Anbaubocks vom Boden ausgehoben werden können, wirken am Anbaubock und auch an dem Trägerelement, das den Anbaubock mit dem Arbeitsaggregat verbindet, je nach Ausbildung des Arbeitsaggregats bisweilen beachtliche Kräfte und Momente. Aus diesem Grund werden der Anbaubock und das genannte Trägerelement traditionell üblicherweise aus massiven Rohrprofilträgern gefertigt, die bei recht geringem Querschnitt ausreichend große Wandstärken besitzen, um der Anbauvorrichtung eine ausreichende Verwindungssteifigkeit und Festigkeit zu geben. Derartige Rahmenkonstruktionen zeichnen sich durch große Widerstandsfähigkeit auch im härtesten Einsatz aus.

Da in jüngerer Zeit an derartigen Landmaschinen immer mehr Funktionalitäten und Beweglichkeiten, beispielsweise zur Erreichung einer guten Bodenanpassung oder Verstellung zwischen Arbeits- und Transportstellung, vorgesehen werden, müssen immer mehr Funktionsbauteile angebracht werden. Diese oft an der Außenseite der Tragrahmenkonstruktion angebauten Funktionsteile beeinträchtigen jedoch die Betriebssicherheit dahingehend, daß an der Maschine arbeitende Personen an diesem "Gestrüpp" leicht hängenbleiben können, und sind zudem eine Sammelstelle für Schmutz und dergleichen. Besonders bei beweglichen Funktionsteilen ergibt sich zudem eine Verletzungsgefahr durch Einquetschen.

Dies tritt besonders bei an Schleppern angebauten Landmaschinen zu Tage, die ein eigenes Fahrwerk haben, da diese zum Kurven fahren oftmals ein um eine aufrechte Trägerschwenkachse schwenkbar am Anbaubock gelagertes Trägerelement aufweisen, so daß die Landmaschine gegenüber dem Anbaubock ausschwenken kann, indem das das Arbeitsagregat mit dem Anbaubock verbindende Trägerelement gegenüber dem Anbaubock verschwenkt. Da andererseits dieses Ausschwenken in der ausgehobenen Transportstellung oder auch in der nur teilweise ausgehobenen Vorgewendestellung der Landmaschine natürlich unerwünscht ist, und in der angehobenen Transport- oder Vorgewendestellung auch sicherzustellen ist, dass die Landmaschine mittig hinter oder vor dem Schlepper in dessen Spur gehalten wird, um die zulässige Straßenfahrbreite einzuhalten, ist es bekannt, bei den Anbauvorrichtungen der genannten Art eine Zentriervorrichtung vorzusehen, die den Tragrahmen in seine unausgeschwenkte Geradeausstellung zentriert, wenn die Landmaschine über den Anbaubock und den daran befestigten Tragrahmen vom Boden ausgehoben wird. Beispielsweise zeigt die DE 69008309 T2 eine derartige Heuwerbungsmaschine mit Zentriervorrichtung, oder die EP 1 522 213, gemäß der ein Dämpfer zwischen Anbaubock und Tragrahmen die möglichen Schwenkbewegungen dämpfen soll. Die DE 36 01 354 A1 beschreibt weiterhin einen Kreiselzetter, dessen Tragrahmen ebenfalls um eine aufrechte Achse schwenkbar an dem Anbaubock gelagert ist. Teleskoplenker sind einerseits an dem Anbaubock bzw. den Unterlenkern der Dreipunktanlenkung desselben angelenkt und andererseits mit dem Tragrahmen des Kreiselzetters gelenkig verbunden.

Bei derartigen Anbauvorrichtungen mit Zentriervorrichtung geht nicht nur von den zueinander verschwenkbaren Rahmenteilen, sondern auch von der Mechanik der Zentrierteile eine besondere Quetschgefahr aus.

Um diese Quetschgefahr zu beseitigen, aber auch um empfindliche Funktionsbauteile zu schützen, werden deshalb bisweilen Abdeckungen oft in Form von Abdeckblechen oder -bügeln vorgesehen, die diese Teile zur Außenseite hin abdecken. Je nach Ausbildung der Maschine beeinträchtigen diese Abdeckungen jedoch bisweilen die Bodenfreiheit, den Raum für die Gelenkwelle oder die Einschlagfreiheit beim Kurvenfahren. Zudem erhöhen sie das Maschinengewicht und die Teilezahl.

Der vorliegenden Erfindung liegt die Aufgabe zugrunde, eine verbesserte Landmaschine der eingangs genannten Art zu schaffen, die Nachteile des Standes der Technik vermeidet und letzteren in vorteilhafter Weise weiterbildet. Insbesondere soll eine einfach aufgebaute Anbauvorrichtung geschaffen werden, die bei geringem Gewicht ausreichend stabil ist, um die Landmaschine in der ausgehobenen Transporterstellung heben zu können und die Betriebsbelastungen sicher auszuhalten, andererseits aber leichtbauend ist und Sicherheitsrisiken wie Quetschgefahr vermeidet.

Erfindungsgemäß wird diese Aufgabe durch eine Anbauvorrichtung gemäß Anspruch 1 gelöst. Bevorzugte Ausgestaltungen der Erfindung sind Gegenstand der abhängigen Ansprüche.

Es wird also vorgeschlagen, den Anbaubock und/oder das Trägerelement der Landmaschine nicht mehr als Rohrprofilrahmen mit über die Länge des Rahmens gleichbleibendem Querschnitt auszubilden, sondern eine selbsttragende Chassiskonstruktion zu schaffen, die die vormals notwendigen separaten Abdeckbleche und die tragenden Rahmenteile zu einer tragenden, großflächigen Struktur mit geringen Wandstärken vereint. Erfindungsgemäß ist vorgesehen, daß der Anbaubock und/oder das Trägerelement, das den Anbaubock mit dem Arbeitsagregat verbindet, einen rahmenlosen, selbsttragend ausgebildeten Hüllkorpus aufweist, dessen Querschnitt sich entlang der Haupterstreckung des Hüllkorpus ändert. Diese rahmenlose Chassisstruktur kann bei geringen Wandstärken großvolumig ausgebildet sein, so daß hohe Flächenträgheitsmomente trotz dünnwandiger Ausbildung und damit hohe Festigkeiten bei geringem Gewicht erzielt werden können, wobei der Korpus sich hinsichtlich seines Querschnitts entlang des üblicherweise U-förmigen bzw. V- oder trapezförmigen Verlaufs des Anbaubocks bzw. entlang des üblicherweise geraden Verlaufs des Trägerelements beliebig ändern kann, insbesondere in den stärker beanspruchten Bereichen und/oder den Platz beanspruchenden Bereichen einen größeren Querschnitt besitzen kann als in den weniger stark beanspruchten bzw. weniger platzbedürftigen Abschnitten. Durch Variation des Querschnitts hinsichtlich Größe und/oder Form kann der Anbaubock und/oder das Trägerelement in verschiedenen Abschnitten verschiedenen Aufgaben angepaßt werden. Insbesondere kann der Querschnitt in den hoch belasteten Bereichen vergrößert und in den schwach belasteten Bereichen verjüngt werden, um bei minimalem Gewicht eine dennoch ausreichende Festigkeit zu erzielen.

Im Gegensatz zu den üblicherweise rohrförmigen oder profilträgerartig ausgebildeten Anbaubockstrukturen, die aus einem ggf. gebogenen Profilrohr bestehen und im Wesentlichen entlang ihres Verlaufes einen gleich bleibenden Querschnitt besitzen, kann mit einem solchen rahmenlosen, selbsttragend ausgebildeten Hüllkorpus oder Chassisteil eine wesentlich leichtere und doch stabile Konstruktion erzielt werden, die hinsichtlich ihres Formverlaufes wesentlich besser an die Notwendigkeiten des Kraftabtrags einerseits und den Platzbedarf der in das Innere des Anbaubocks zu integrierenden Komponenten anpassbar ist. Ein solchermaßen ausgebildeter Anbaubock bildet eine Synthese aus den bislang verwendeten Abdeckblechen und dem Profilträger bislang verwendeter Anbauvorrichtungen.

In vorteilhafter Weiterbildung der Erfindung kann der genannte Hüllkorpus dabei eine mehrachsig gekrümmte Freiformfläche nach Art eines dreidimensional gewölbten Reliefs bilden. Durch die zumindest bereichsweise großvolumige und querschnittsvariable Konturierung des Hüllkorpus können Funktionsbauteile der Landmaschine wie beispielsweise eine Zentriervorrichtung für das Trägerelement im Bauch des Hüllkörpers aufgenommen und doch paßgenau abgedeckt werden, ohne Bau- bzw. Freiraum zu verschenken.

In Weiterbildung der Erfindung kann der genannte Hüllkorpus aus einer Halbschale bestehen oder aus mehreren Halbschalen, die jeweils freiformflächenartig konturiert sein können, zusammengesetzt sein. Die genannten Halbschalen könne dabei verscheiden beschaffen sein, beispielsweise können zur Erreichung besonders hoher Festigkeiten Verbundformteile Verwendung finden.

In besonders vorteilhafter Weise der Erfindung kann die selbsttragende Hüllkorpusausbildung des Anbaubocks und/oder des Trägerelements durch Tiefziehen bzw. Pressumformen von Blechplatinen erzeugt werden, wodurch sich nahezu beliebige Formgebungen erreichen lassen. Die tiefgezogenen und/oder pressumgeformten Blechplatinen bilden dabei schalenförmig die Wandung und Außenseite des Anbaubocks und/oder des Trägerelements, wodurch separate Abdeckbleche und dergleichen entbehrlich werden. Abdeckbleche und Trägerprofile von Anbaubock und Trägerelement werden sozusagen miteinander verschmolzen und von den tiefgezogenen und/oder pressumgeformten Blechplatinen bzw. Schalenteilen gebildet. Durch den Aufbau des Anbaubocks, des Trägerelements und/oder weiterer tragender Rahmenteile aus gezogenen, dünnen Blechen kann neben den genannten Vorteilen überdies eine beachtliche Optimierung der Herstellkosten erreicht werden. Durch gezielten Materialeinsatz und die Verwendung dünner Bleche können vergleichsweise kleine Schweißnähte, die wesentlich schneller zu fertigen sind, vorgesehen werden bzw. kann ggf. weitgehend auf Schweißnähte verzichtet werden, wodurch die Schweißzeiten stark reduziert werden.

Insbesondere kann der selbsttragende, den Anbaubock bildende Hüllkorpus in einem Kopfbereich des Anbaubocks, in dem der Oberlenker angelenkt ist, einen wesentlich größeren Querschnitt besitzen als im Bereich unterer Endabschnitte des Anlenkbocks, an denen die Unterlenker angelenkt sind. In den volumen- bzw. querschnittsmäßig vergrößerten Kopfabschnitt des Anbaubocks kann die genannte Zentriervorrichtung integriert sein. Je nach Geometrie und Spreizung der auftretenden Biegemomente und Kräfte kann der Hüllkorpus seinen Querschnitt entlang seiner Haupterstreckung derart stark ändern, daß eine maximale Querschnittsfläche mindestens doppelt so groß wie eine minimale Querschnittsfläche, vorzugsweise etwa im Bereich des zweifachen bis zehnfachen der minimalen Querschnittsfläche beträgt. Die Flächenträgheitsmomente des selbsttragenden Hüllkorpus und damit die Festigkeit des tragenden Bauteils wie Anbaubock, Trägerelement und ähnliche Strukturbauteile können maßgeschneidert an die auftretenden Belastungen angepaßt werden.

Der Hüllkorpus kann in Weiterbildung der Erfindung dabei eine zumindest abschnittsweise offene Rückseite aufweisen, von der her sich das Trägerelement mit einer daran befestigten Funktionsfläche in den Hüllkorpusinnenraum hineinerstreckt, so dass ein Funktionsabschnitt des Trägerelements im Bauch des Anbaubocks aufgenommen ist. Die Wandungen des Anbaubocks und des daran angelenkten Trägerelements decken dabei ein vorzugsweise bewegliches Funtionsbauteil wie die vorgenannte Zentriervorrichtung zur Außenseite hin ab, so dass eine Quetschgefahr beseitigt ist.

In vorteilhafter Weise kann sowohl das genannte Trägerelement als auch der Anbaubock in entsprechender Weise aus einer rahmenlosen Chassiskonstruktion bestehen, die einen selbsttragend ausgebildeten Hüllkorpus mit sich entlang des Verlaufs des Trägerelements mehr oder minder stark änderndem Querschnitt aufweist.

In vorteilhafter Weiterbildung der Erfindung lassen sich hierdurch besonders vorteilhafte großvolumige und doch dünnwandige Ausbildungen von Anbaubock und Trägerelement erreichen, die bei niedrigem Gewicht hohe Festigkeit bewirken und eine Aufnahme bzw. Integration von beweglichen Funktionsbauteilen, insbesondere der Zentriervorrichtung in den Innenraum des Anbaubocks und/oder des Trägerelements ermöglichen, um die hiervon ausgehende Quetschgefahr zu beseitigen.

In Weiterbildung der Erfindung kann der selbsttragende Hüllkorpus, der den Anbaubock bildet und aus den tiefgezogenen Blechplatinen bestehen kann, zumindest abschnittsweise, insbesondere im Bereich eines Kopfabschnitts des Anbaubocks, an dem der Oberlenker angelenkt ist, ein Verhältnis von Querschnittsumfang zu Wandstärke von größer als 100, vorzugsweise größer als 200 und insbesondere auch noch größer als 400 aufweisen. Wird beispielsweise der Korpus des Anbaubocks aus einem 2 mm-Stahlblech tiefgezogen und besitzt der Anbaubock in seinem genannten Kopfabschnitt einen - im Querschnitt parallel zu einer vertikalen Längsmittelebene betrachtet - einen Umfang von 80 cm, beträgt das genannte Verhältnis von Querschnittsumfang zu Wandstärke 400. Es versteht sich jedoch, dass dieser Wert des Verhältnisses von Querschnittsumfang zu Wandstärke variieren und an die Ausbildung der konkreten Landmaschine und insbesondere ihres Arbeitsaggregats angepasst werden kann. In entsprechender Weise kann das Querschnittsflächen-/Wandstärkenverhältnis bei dem genannten Trägerelement ausgebildet sein. Im Gegensatz zu herkömmlichen Rohrkonstruktionen des Anbaubocks und des Trägerlements zeichnen sich diese jedoch in jedem Fall durch ein wesentlich größeres Verhältnis von Querschnittsumfang zu Wandstärke aus, da mit dünnwandigen Blechplatinen großvolumige Anbaubockstrukturen tiefgezogen werden, die ausreichend Platz bieten, um Funktionsbauteile wie die Zentriervorrichtung im Inneren aufzunehmen.

Um eine hohe Betriebssichterheit zu erzielen und eine Quetschgefahr auch ohne zusätzliche Schutzabdeckungen zu vermeiden, kann nach einem vorteilhaften Aspekt der vorliegenden Erfindung insbesondere vorgesehen sein, dass die Zentriervorrichtung im Inneren des Anbaubocks und/oder im Inneren des Trägerelements liegend angeordnet ist. Insbesondere kann dabei ein Zentrierflächenpaar, das je nach Stellung des Anbaubocks in und außer Eingriff gerät, in einen Innenraum des Anbaubocks bzw. einen Innenraum des Trägerelements integriert sein, so dass es von der Wandung des Anbaubocks bzw. des Trägerelements selbst zur Außenseite hin abgedeckt ist. Die Zentriervorrichtung ist dabei mit ihren wesentlichen Teilen im Bauch des Anbaubocks angeordnet und sozusagen in diesem versteckt, so dass die Gefahr von Quetschverletzungen gebannt ist.

In vorteilhafter Weiterbildung der Erfindung kann der Anbaubock eine schlitzförmige Durchtrittsöffnung aufweisen, durch die ein Schwenkhebel der Zentriervorrichtung hindurchtritt derart, dass der Oberlenkeranlenkpunkt des Schwenkhebels außerhalb des Anbaubocks und die Schwenkachse und die Zentrierfläche des Schwenkhebels im Innenraum des Anbaubocks angeordnet sind. Ggf. kann der Schwenkhebel gänzlich in den Innenraum des hohl ausgebildeten Anbaubocks versenkt sein, so dass sich durch die genannte schlitzförmige Durchtrittsöffnung der Oberlenker selbst bzw. ein damit verbundenes Anlenkteil hindurch erstreckt. Um ein einfaches An- und Abmontieren des Oberlenkers zu ermöglichen, ist jedoch die zuvor genannte Ausführung bevorzugt, gemäß der der Schwenkhebel durch die genannte Durchtrittsöffnung in der Anbaubockwandung hindurchtritt.

In Weiterbildung der Erfindung kann auch die Trägerschwenkachse des Trägerelements und/oder die an dem Trägerelement angebrachte Zentrierfläche in das Innere des Anbaubocks integriert sein.

Vorteilhafterweise kann nämlich vorgesehen sein, die beim Anheben bzw. Ausheben der Landmaschine an der Dreipunktanlenkung erzeugten Kräfte über einen Schwenkhebel in eine Zentrierkraft zu übersetzen bzw. zu untersetzen, die über ein Zentrierflächenpaar an dem Schwenkhebel und dem Trägerelement, die in und außer Eingriff bringbar sind, in eine Zentrierbewegung des Trägerelements umgesetzt wird. Hierdurch können die Vorteile der bisher bekannten Zentriervorrichtungstypen miteinander kombiniert werden, ohne deren Nachteile zu übernehmen. Insbesondere kann einerseits durch die Hebelübersetzung bzw. -untersetzung eine große Zentrierkraft erzielt werden, ohne dies durch große Stellwege und viel zusätzliches "Gestrüpp" am Gerät in Form von seitlich abstehenden Zentrierstreben und dergleichen zu erkaufen, wobei andererseits gleichzeitig eine hohe Reaktionsgeschwindigkeit, eine große Bodenfreiheit und stabile Führung erreicht wird.

Die Erfindung wird nachfolgend anhand eines vorteilhaften Ausführungsbeispiels und den zugehörigen Zeichnungen näher erläutert. In den Zeichnungen zeigen:
- Fig. 1:: eine schematische Seitenansicht einer an einen Schlepper anbaubaren Heuwerbungsmaschine in Form eines Kreiselschwaders nach einer vor- teilhaften Ausführung der Erfindung, die schematisch den Anbaubock zum Anbau an den Schlepper, das daran schwenkbar befestigte Träger- element und das durch ein Fahrwerk am Boden abgestützte Arbeitsag- gregat in Form des Kreiselrechens zeigt,
- Fig. 2:: eine vergrößerte, ausschnittsweise Teilschnittansicht der Heuwer- bungsmaschine aus Fig. 1, die den Anbaubock und dessen Dreipunktan- lenkung am Schlepper, das daran angelenkte Trägerelement und die hierfür vorgesehene Zentriervorrichtung zeigt, wobei die Heuwerbungs- maschine in einer abgesenkten Arbeitsstellung dargestellt ist, in der die Zentrierflächen der Zentriervorrichtung außer Eingriff sind,
- Fig.3:: eine perspektivische Darstellung der Anbauvorrichtung einschließlich des Anbaubocks und des daran angelenkten Trägerelements schräg von vorne,
- Fig. 4:: eine perspektivische Ansicht des Anbaubocks und des daran angelenk- ten Trägerelements schräg von hinten,
- Fig. 5:: eine Seitenansicht des Trägerelements der Heuwerbungsmaschine aus den vorhergehenden Figuren, wobei in den dargestellten Schnittansich- ten A-A bis F-F der sich ändernde Querschnittsverlauf der selbsttragen- den Hüllkorpuskonstruktion des Trägerelements dargestellt ist, und
- Fig. 6: eine perspektivische Ansicht eines Trägerelements nach einer alternati- ven Ausführung der Erfindung, gemäß der am arbeitsagregatsseitigen Ende des Trägerelements sich quer erstreckende Anschlußabschnitte angeformt sind.

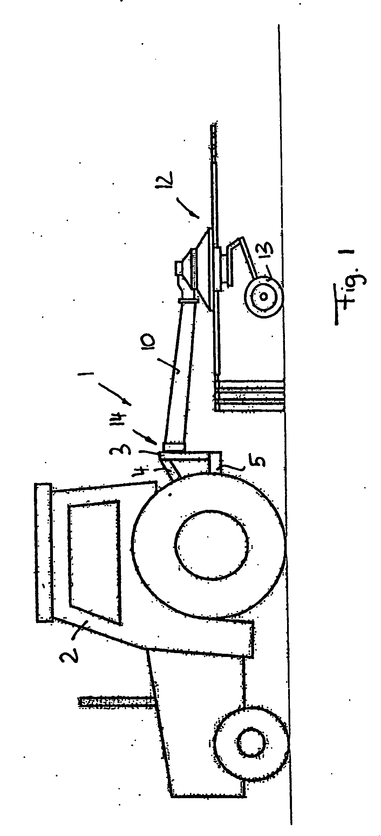

Die in Fig. 1 dargestellte Heuwerbungsmaschine ist als Einkreiselschwader ausgebildet und besitzt eine Anbauvorrichtung 1 zum Anbau an den Schlepper 2, die einen Anbaubock 3 umfasst, der mittels einer Dreipunktanlenkung umfassend einen Oberlenker 4 und zwei Unterlenker 5 an dem Schlepper 2 befestigt werden kann. Wie die Figuren 1, 2 und 4 zeigen, besitzt der Anbaubock 3 dabei - grob gesprochen - eine im Wesentlichen U-förmige bzw. bogenförmige Kontur, deren Schenkel sich nach unten zu den Unterlenkern 5 erstrecken und dessen Verbindungs- bzw. Kopfabschnitt 7 oben liegt. An den unteren Enden der aufgespreizten Schenkel 6 sind dabei Unterlenkeranlenkpunkte 8 vorgesehen, während im Bereich des genannten Kopfabschnitts 7 der Oberlenkeranlenkpunkt 9 vorgesehen ist.

An dem Anbaubock 3 ist ein auskragendes Trägerelement 10 befestigt, das an dem genannten Anbaubock 3 um eine aufrechte Trägerschwenkachse 11 schwenkbar gelagert ist und an seinem hinteren Ende das Arbeitsaggregat 12 in Form des Kreiselrechens trägt. Wie Fig. 1 zeigt, ist das genannte Arbeitsaggregat 12 dabei durch ein Fahrwerk 13 am Boden abgestützt, so dass bei Kurvenfahrten in der gezeigten Arbeitsstellung gemäß Fig. 1 das Arbeitsaggregat 12 nach Art eines Anhängers nachläuft und das Trägerelement 10 hin und her schwenkt.

Um diese in der Arbeitsstellung bei Kurvenfahrten gewünschten Auslenkungen des Trägerelements 10 in der angehobenen Transportstellung zu unterbinden, ist dem Trägerelement 10 eine Zentriervorrichtung 14 zugeordnet, die in den Kopfabschnitt 7 des Anbaubocks 3 integriert ist.

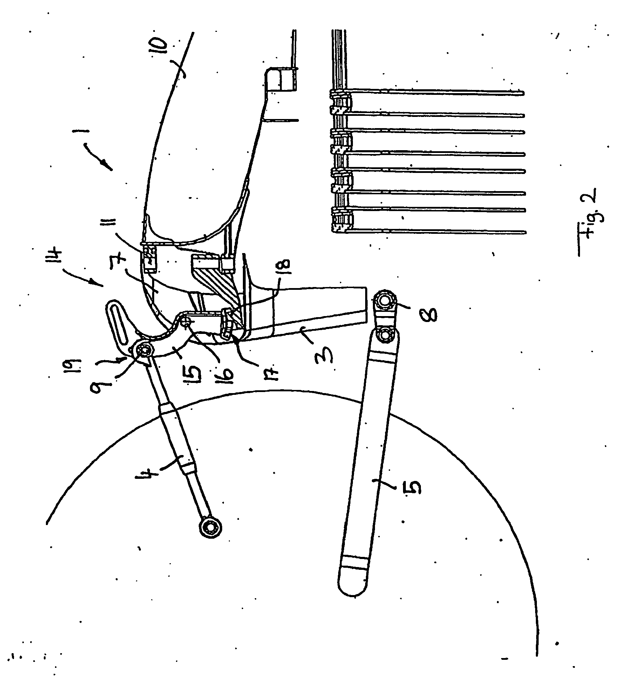

Wie die Figur 2 zeigt, ist im Inneren des Anbaubocks 3 ein leicht gekröpfter Schwenkhebel 15 vorgesehen, der in der gezeichneten Ausführungsform als Wippe ausgebildet ist, die um eine Zentrierhebelschwenkachse 16 hin und her wippbar ist. Die genannte Zentrierhebelschwenkachse 16 ist dabei im Inneren des Anbaubocks 3 angeordnet und erstreckt sich liegend quer zur Fahrtrichtung, so dass der Schwenkhebel 15 in einer aufrechten Schwenkebene parallel zur Fahrtrichtung verschwenken kann.

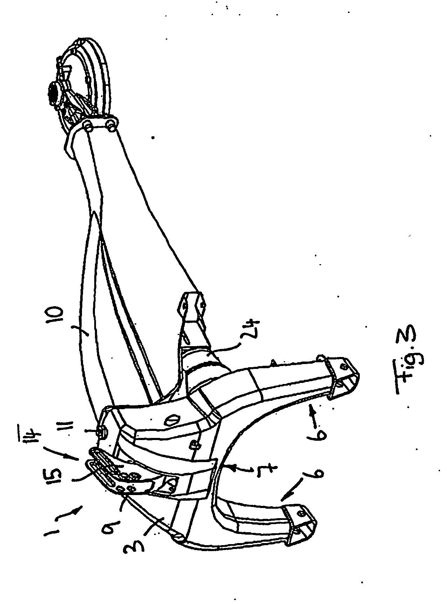

Wie die Figuren 2 und 3 zeigen, trägt der Schwenkhebel 15 an seinem oberen Ende den Oberlenkeranlenkpunkt 9, während an einem unteren Ende des Schwenkhebels 15 eine sich zu einer Seite hin v-förmig oder bogenförmig verjüngende Zentrierfläche 17 vorgesehen ist, die mit einer daran angepassten Zentrierfläche 18 in Form eines Zentriervorsprungs an dem Trägerelement 13 in und außer Eingriff bringbar ist. Zwischen der genannten Zentrierfläche 17 und dem Oberlenkeranlenkpunkt 9 ist die Zentrierhebelschwenkachse 16 angeordnet.

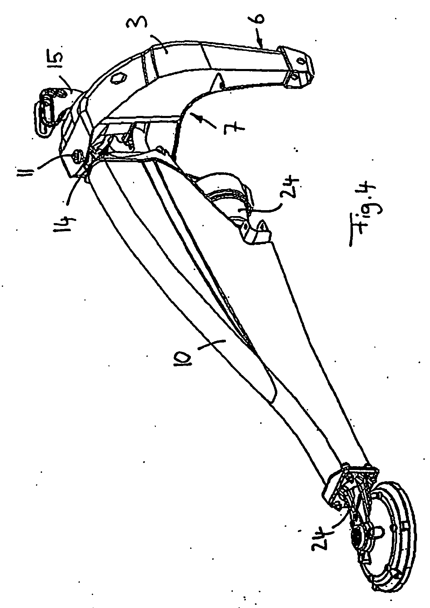

Wie die Figur 2 zeigt, ist die Zentriervorrichtung 14 und insbesondere der Schwenkhebel 15 mit dem größten Teil seiner Erstreckung in den Innenraum des Anbaubocks 3 integriert. Der genannte Anbaubock 3 besitzt hierbei an der Oberseite seines Kopfabschnitts 7 eine schlitzförmige Durchtrittsöffnung, durch die hindurch sich der Schwenkhebel 15 erstreckt, vgl. Figuren 3 und 4.

Der Anbaubock 3 besitzt hierbei einen vom Volumen her betrachtet deutlich vergrößerten Kopfabschnitt 7, dessen Querschnittsfläche (in einem Querschnitt senkrecht zum U-förmigen Verlauf der Anbaubocklängserstreckung) deutlich größer ist als der entsprechende Querschnitt der Schenkel 6 des Anbaubocks 3. In der gezeichneten Ausführungsform ist der Querschnitt des Anbaubocks 3 i seinem Kopfabschnitt 7 flächenmäßig mehr als doppelt so groß als der Querschnitt im Bereich der Schenkel 6, vgl, Fig. 3 und 4.

Wie die Figuren 3 bis 5 am besten zeigen, ist der Anbaubock 3 in Form einer tiefgezogenen, mehrachsig gekrümmten Freiformfläche ausgebildet und besteht vorteilhafterweise aus einem tiefgezogenen Blechprofil, das einen selbsttragenden, rahmenlosen Hüllkorpus 23 bildet, der einerseits eine Abdeckung für die Zentriervorrichtung 14 bildet und andererseits jedoch die tragende Struktur des Anbaubocks 3 bildet. In der gezeichneten Ausführungsform ist der genannte Hüllkorpus 23 in seinem Kopfabschnitt 7 zur Rückseite, d.h. zum Trägerelement 10 hin offen ausgebildet.

Im Inneren des genannten Hüllkorpus 23 ist dabei das Zentrierflächenpaar 17 und 18 an dem Schwenkhebel 15 und dem Trägerelement 10 angeordnet, wodurch eine entsprechende Quetschgefahr vermieden ist. Gleichzeitig ist auch die Trägerschwenkachse 11 im Inneren des Anbaubocks 3 aufgenommen.

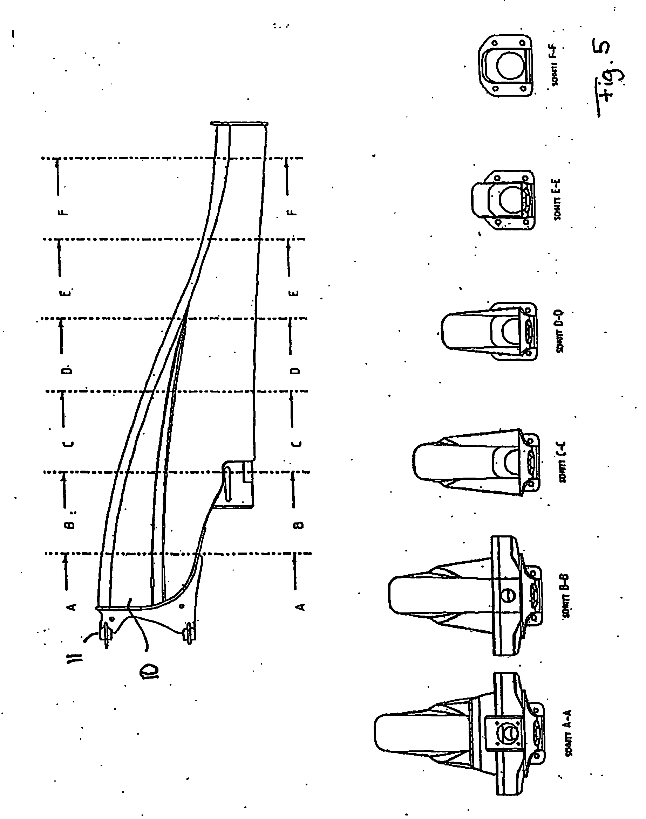

Vorteilhafterweise ist auch das Trägerelement 10 als tiefgezogenes Blechprofil ausgebildet, das ebenfalls die Gestalt einer mehrachsig gekrümmten Freiformfläche aufweisen kann, wie dies insbesondere Fig. 5 zeigt. Der Querschnitt des Trägerelements 10 ändert sich hierbei entlang seiner Längserstreckung beträchtlich, wie die verschiedenen Querschnitte A-A bis F-F zeigen. Das Trägerelement 10 ist bei recht dünnen Wandstärken beträchtlich voluminöser ausgebildet als herkömmliche Maschinenrahmenträger von Heuwerbungsmaschinen in Form von Rohrprofilen oder anderen, im Wesentlichen zylindrischen Trägerprofilen mit gleich bleibendem Querschnitt.

Wie die Figuren 3 und 4 zeigen, ist das Trägerelement 10 dabei von seinem an den Anbaubock 3 angrenzenden Kopfabschnitt nach hinten so weit nach unten gezogen, daß die Gelenkwelle 24, mittels derer das Arbeitsagregat 12 vom Schlepper 2 her angetrieben wird, im Bauch des Trägerelements 10 angeordnet ist. Durch die Integration der Gelenkwelle 24 in das Innere des Trägerelements 10 wird die von der Gelenkwelle ausgehende Verletzungsgefahr beträchtlich reduziert.

In der gezeichneten Ausführungsform besitzt das Trägerelement dabei einen Querschnitt (senkrecht zur Längserstreckung des Trägerelements 10), der sich vom hinteren Ende des Trägerelements 10, an dem das Arbeitsagregat 12 befestigt ist, zum vorderen Ende des Trägerelements 10, das an dem Anbaubock 3 angelenkt ist, kontinuierlich vergrößert. In der gezeichneten Ausführung ist der maximale Querschnitt am vorderen Endbereich flächenmäßig betrachtet mehr als doppelt so groß als der minimale Querschnitt am hinteren Ende.

Wie die Schnittansichten der Figur 5 zeigen, ändert sich dabei nicht nur die vertikale Ausdehnung, sondern auch die horizontale Ausdehnung des Querschnittsprofils des Trägerelements 10 über dessen Länge. In der gezeichneten Ausführung besitzt dabei der Querschnitt im vorderen Bereich des Trägerelements 10 nach unten hin eine stufenförmige Verbreiterung, vgl. Fig. 4, in der die Gelenkwelle 24 aufgenommen ist.

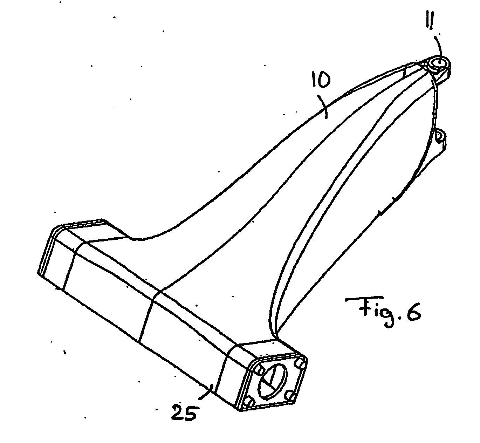

Wie Figur 6 zeigt, kann das Trägerelement 10 an die Ausbildung des jeweiligen Arbeitsagregats 12 individuell angepaßt sein. In der in Figur 6 gezeichneten Ausführung umfaßt der Hüllkorpus des Trägerelements 10 an seinem dem Arbeitsagregat zugewandten Ende einen angeformten Querkasten 25 mit Anschlußstücken, an dem weitere Trägerteile angeschlossen werden können, wie dies beispielsweise bei Mehrkreiselzettern üder Fall sein kann. Das Trägerelement 10 verbreitert sich dabei zu seinem hinteren Ende hin kontinuierlich und geht harmonisch gerundet in den genannten Querkasten 25 über, vgl. Fig. 6.

Die Anbauvorrichtung der Heuwerbungsmaschine besitzt dabei im Wesentlichen folgende Funktion: In der abgesenkten Arbeitsstellung gemäß Fig. 1 schwenkt der Oberlenker 4 den Schwenkhebel 15 in seine freigebende Stellung, so dass das Trägerelement 10 und damit das daran befestigte Arbeitsaggregat 12 bei Kurvenfahrten entsprechend ausschwenken kann.

Wird der Anbaubock 3 über die Dreipunktanlenkung angehoben, schwenkt der Oberlenker 4 den Schwenkhebel 15 mit zunehmendem Anheben zunehmend in seine zentrierende Stellung, so dass dieser versucht, das Trägerelement 10 in seiner zentrierte Stellung zu schwenken. Dabei gleitet die Zentrierfläche 18 am Trägerelement 10 auf der Zentrierfläche 17 des Schwenkhebels 15 ab, bis die Zentrierstellung erreicht und fixiert wird.

## Patentansprüche

1. Landmaschinen, vorzugsweise in Form einer Heuwerbungsmaschine wie Zetter oder Schwader, mit einem Anbaubock (3), der mittels einer Dreipunktanlenkung an einen Schlepper (2) anbaubar ist, sowie einem Arbeitsaggregat (12), das mittels eines am Anbaubock (3) befestigeten Trägerelements (10) gelagert ist, **dadurch gekennzeichnet, dass** der Anbaubock (3) und/oder das Trägerelement (10) einen rahmenlosen, selbsttragend ausgebildeten Hüllkorpus aufweist, dessen Querschnitt sich entlang der Haupterstreckung des Hüllkorpus ändert.

2. Landmaschine nach dem vorhergehenden Anspruch, wobei der Hüllkorpus (23) eine mehrachsig gekrümmte Freiformfläche bildet.

3. Landmaschine nach einem der vorhergehenden Ansprüche, wobei der selbsttragend ausgebildete Hüllkorpus (23) des Anbaubocks (3) und/oder des Trägerelements (10) aus einem tiefgezogenen und/oder pressumgeformten Blechprofil besteht.

4. Landmaschine nach einem der vorhergehenden Ansprüche, wobei der Hüllkorpus des Anbaubocks (3) und/oder des Trägerelements (10) zumindest abschnittsweise, insbesondere in einem Kopfabschnitt (7) ein Verhältnis von Querschnittsumfang zu Wandstärke von größer als 100, vorzugsweise größer als 200, insbesondere größer als 400 aufweist.

5. Landmaschine nach einem der vorhergehenden Ansprüche, wobei der Anbaubock (3) und/oder das Trägerelement (10) zumdest abschnittsweise ein zu einer Seite offenes Profil besitzt, wobei der Anbaubock (3) insbesondere eine in seinem Kopfabschnitt (7) offene Rückseite aufweist, von der her sich das Trägerelement (10) mit einer daran befestigten Funktionsfläche (18) in den Anbaubockinnenraum hinein erstreckt.

6. Landmaschine nach einem der vorhergehenden Ansprüche, wobei der Hüllkorpus seinen Querschnitt entlang seiner Haupterstreckung derart stark ändert, daß eine maximale Querschnittsfläche mindestens doppelt so groß wie eine minimale Querschnittsfläche, vorzugsweise etwa im Bereich des zweifachen bis zehnfachen der minimalen Querschnittsfläche beträgt.

7. Landmaschine nach einem der vorhergehenden Ansprüche, wobei der Hüllkorpus des Anbaubocks (3) einen sich vom Oberlenkeranlenkpunkt (9) zu den Unterlenkeranlenkpunkten (8) hin kontinuierlich verjüngenden Querschnitt besitzt.

8. Landmaschine nach einem der vorhergehenden Ansprüche, wobei der Hüllkorpus des Trägerelements (10) einen sich vom Anbaubock (3) zu dem Arbeitsagregat (12) hin kontinuierlich verjüngenden Querschnitt besitzt.

9. Landmaschine nach einem der vorhergehenden Ansprüche, wobei im Inneraum des Hüllkorpus des Anbaubocks (3) ein beweglich gelagertes Funktionsbauteil, vorzugsweise in Form einer beweglichen Zentriervorrichtung (14), gelagert ist.

10. Landmaschine nach einem der vorhergehenden Ansprüche, wobei im Inneraum des Hüllkorpus des Anbaubocks (3) ein beweglich gelagertes Funktionsbauteil, vorzugsweise eine das Arbeitsagregat (12) antreibende Gelenkwelle (24), gelagert ist.

11. Landmaschine nach einem der vorhergehenden Ansprüche, wobei das Trägerelement (10) um eine aufrechte Trägerschwenkachse an dem Anbaubock (3) schwenkbar gelagert ist und eine Zentriervorrichtung (14) zum Zentrieren des Trägerelements (10) und des daran befestigten Arbeitsaggregats (12) in eine neutrale Zentrierstellung beim Anheben des Anbaubocks (3) und/oder Ausheben des Arbeitsaggregats (12) vorgesehen ist.

12. Landmaschine nach dem vorhergehenden Anspruch, wobei die Zentriervorrichtung (14) im Inneren des rahmenlosen, selbsttragenden Hüllkorpus angeordnet ist.

13. Landmaschine nach einem der beiden vorhergehenden Ansprüche, wobei die Zentriervorrichtung (14) einen am Anbaubock (3) um eine vorzugsweise liegende Zentrierhebelschwenkachse (16) schwenkbar gelagerten Schwenkhebel (15) umfasst, der einerseits einen Oberlenkeranlenkpunkt (9) und andererseits eine Zentrierfläche (17), die durch Verschwenken des Schwenkhebels (15) beim Anheben/Absenken des Anbaubocks (3) in und außer Eingriff mit einem am Trägerelement (10) vorgesehenen Zentrierfläche (18) bringbar ist, aufweist.

14. Landmaschine nach dem vorhergehenden Anspruch, wobei das in und außer Eingriff bringbare Zentrierflächenpaar (17, 18) und/oder zumindest ein Teil des Schwenkhebels (15) der Zentriervorrichtung (14) im Inneren des Anbaubocks (3) und/oder des Trägerelements (10) angeordnet ist.

15. Landmaschine nach einem der beiden vorhergehenden Ansprüche, wobei der Anbaubock (3) eine schlitzförmige Durchtrittsöffnung aufweist, durch die der Schwenkhebel der Zentriervorrichtung (14) hindurchtritt, so dass der Oberlenkeranlenkpunkt (9) des Schwenkhebels (15) außerhalb des Anbaubocks (3) und die Zentrierhebelschwenkachse (16) und die Zentrierfläche (17) des Schwenkhebels (15) im Innenraum des Anbaubocks (3) angeordnet sind.

## Claims

1. An agricultural machine, preferably in the form of a hay-making machine such as a tedder or a swather, having an installation block (3) which can be attached to a tractor (2) by means of a three-point pivotal connection and having a piece of work equipment (12) which is supported by means of a carrier element (10) fastened to the installation block (3), **characterised in that** the installation block (3) and/or the carrier element (10) has a frame-less enveloping body made as self-supporting whose cross-section changes along the main extent of the enveloping body.

2. An agricultural machine in accordance with the preceding claim, wherein the enveloping body (23) forms a multiaxially curved freeform surface.

3. An agricultural machine in accordance with either of the preceding claims, wherein the enveloping body (23) made as self-supporting of the installation block (3) and/or of the carrier element (10) comprises a deep-drawn and/or press-shaped sheet metal section.

4. An agricultural machine in accordance with one of the preceding claims, wherein the enveloping body of the installation block (3) and/or of the carrier element (10) has, at least sectionally, in particular in a head section (7) a ratio of cross-sectional periphery to wall thickness of more than 100, preferably more than 200, in particular more than 400.

5. An agricultural machine in accordance with one of the preceding claims, wherein the installation block (3) and/or the carrier element (10) has a section open to one side at least sectionally, with the installation block (3) in particular having a rear side open in its head section (7) and from where the carrier element (10) extends with a functional surface (18) fastened thereto into the inner space of the installation block.

6. An agricultural machine in accordance with one of the preceding claims, wherein the enveloping body changes its cross-section along its main extent so much that a maximum cross-sectional area is at least twice as large as a minimum cross-sectional area, preferably approximately in the range of twice to ten times the minimum cross-sectional area.

7. An agricultural machine in accordance with one of the preceding claims, wherein the enveloping body of the installation block (3) has a cross-section tapering continuously from the upper linkage pivotal connection point (9) toward the lower linkage pivotal connection points (8).

8. An agricultural machine in accordance with one of the preceding claims, wherein the enveloping body of the carrier element (10) has a cross-section tapering continuously from the installation block (3) to the piece of work equipment (12).

9. An agricultural machine in accordance with one of the preceding claims, wherein a movably supported functional component, preferably in the form of a movable centring apparatus (14), is supported in the inner space of the enveloping body of the installation block (3).

10. An agricultural machine in accordance with one of the preceding claims, wherein a movably supported functional component, preferably in the form of an articulated shaft (24) driving the piece of work equipment (12), is supported in the inner space of the enveloping body of the installation block (3).

11. An agricultural machine in accordance with one of the preceding claims, wherein the carrier element (10) is pivotably supported at the installation block (3) about an upright carrier pivot axis and a centring apparatus (14) is provided for centring the carrier element (10) and the piece of work equipment (12) fastened thereto into a neutral centring position on the raising of the installation block (3) and/or on the lifting of the piecing of work equipment (12).

12. An agricultural machine in accordance with the preceding claim, wherein the centring apparatus (14) is arranged in the interior of the frame-less self-supporting enveloping body.

13. An agricultural machine in accordance with either of the two preceding claims, wherein the centring apparatus (14) includes a pivot lever (15) which is pivotally supported at the installation block (3) about a preferably lying centring lever pivot axis (16) and which has an upper linkage pivotal connection point (9), on the one hand, and a lower centring surface (17), on the other hand, which can be brought into and out of engagement with a centring surface (18) provided at the carrier element (10) by pivoting of the pivot lever (15) on the raising/lowering of the installation block (3).

14. An agricultural machine in accordance with one of the preceding claims, wherein the centring surface pair (17, 18) which can be brought into and out of engagement and at least a part of the pivot lever (15) of the centring apparatus (14) is/are arranged in the interior of the installation block (3) and/or of the carrier element (10).

15. An agricultural machine in accordance with either of two the preceding claims, wherein the installation block (3) has a slit-shaped passage opening through which the pivot lever of the centring apparatus (14) passes so that the upper linkage pivotal connection point (9) of the pivot lever (15) is arranged outside the installation block (3) and the centring lever pivot axis (16) and the centring surface (17) of the pivot lever (15) are arranged in the inner space of the installation block (3).

## Revendications

1. Machine agricole, de préférence sous la forme d'une faucheuse, telle qu'une épandeuse-faucheuse combinée ou une andaineuse, comportant un bâti d'attelage (3) qui peut être assemblé à un tracteur (2) au moyen d'une articulation à trois points, ainsi qu'une unité de travail (12) qui est montée au moyen d'un élément de support (10) fixé au bâti d'attelage (3), **caractérisée en ce que** le bâti d'attelage (3) et/ou l'élément de support (10) comportent un corps enveloppant autoporteur sans cadre, dont la section varie le long de l'extension principale du corps enveloppant.

2. Machine agricole selon la revendication précédente, dans laquelle le corps enveloppant (23) forme une surface à forme libre cambrée multiaxiale.

3. Machine agricole selon l'une quelconque des revendications précédentes, dans laquelle le corps enveloppant (23) autoporteur du bâti d'attelage (3) et/ou de l'élément de support (10) est réalisé dans un profilé en tôle embouti et/ou formé par pressage.

4. Machine agricole selon l'une quelconque des revendications précédentes, dans laquelle le corps enveloppant du bâti d'attelage (3) et/ou de l'élément de support (10) présente au moins par zones, en particulier dans une partie supérieure (7), un rapport entre le périmètre de la section et l'épaisseur de la paroi qui est supérieur à 100, de préférence supérieur à 200, en particulier supérieur à 400.

5. Machine agricole selon l'une quelconque des revendications précédentes, dans laquelle le bâti d'attelage (3) et/ou l'élément de support (10) possèdent, au moins par zones, un profil ouvert vers un côté, le bâti d'attelage (3) comportant en particulier une face arrière ouverte dans sa partie supérieure (7), l'élément de support (10) s'étendant à partir de ladite face arrière avec une face fonctionnelle (18) fixée à cette dernière vers le volume intérieur du bâti d'attelage.

6. Machine agricole selon l'une quelconque des revendications précédentes, dans laquelle le corps enveloppant possède une section variant fortement le long de son extension principale, de telle sorte que la plus grande surface de section mesure au moins le double de la plus petite surface de section, de préférence dans une plage de deux à dix fois la plus petite surface de section.

7. Machine agricole selon l'une quelconque des revendications précédentes, dans laquelle le corps enveloppant du bâti d'attelage (3) possède une section qui se rétrécit en continu depuis le point d'articulation supérieur (9) vers les points d'articulation inférieurs (8).

8. Machine agricole selon l'une quelconque des revendications précédentes, dans laquelle le corps enveloppant de l'élément de support (10) possède une section qui se rétrécit en continu depuis le bâti d'attelage (3) vers l'unité de travail (12).

9. Machine agricole selon l'une quelconque des revendications précédentes, dans laquelle un élément fonctionnel monté de manière mobile, de préférence sous la forme d'un dispositif de centrage (14) mobile, est monté dans le volume intérieur du corps enveloppant du bâti d'attelage (3).

10. Machine agricole selon l'une quelconque des revendications précédentes, dans laquelle un élément fonctionnel monté de manière mobile, de préférence un arbre articulé (24) entraînant l'unité de travail (12), est monté dans le volume intérieur du corps enveloppant du bâti d'attelage (3).

11. Machine agricole selon l'une quelconque des revendications précédentes, dans laquelle l'élément de support (10) est monté sur le bâti d'attelage (3) de manière à pouvoir pivoter autour d'un axe de pivotement vertical, et un dispositif de centrage (14), destiné à centrer l'élément de support (10) et l'unité de travail (12) fixée à ce dernier, est prévu dans une position de centrage neutre au moment du levage du bâti d'attelage (3) et/ou du démontage de l'unité de travail (12).

12. Machine agricole selon la revendication précédente, dans laquelle le dispositif de centrage (14) est agencé à l'intérieur du corps enveloppant autoporteur sans cadre.

13. Machine agricole selon l'une des deux revendications précédentes, dans laquelle le dispositif de centrage (14) comporte un levier pivotant (15), qui est monté sur le bâti d'attelage (3) de manière à pouvoir pivoter autour d'un axe de pivotement (16) de préférence horizontal et qui, d'une part, comporte un point d'articulation supérieur (9) et, d'autre part, une surface de centrage (17) qui, sous l'effet du pivotement du levier pivotant (15) lors du levage ou de l'abaissement du bâti d'attelage (3), peut être amené en prise ou hors de prise avec une surface de centrage (18) prévue sur l'élément de support (10).

14. Machine agricole selon la revendication précédente, dans laquelle la paire de surfaces de centrage (17, 18), pouvant être amenées en prise ou hors de prise l'une avec l'autre, et/ou au moins une partie du levier pivotant (15) du dispositif de centrage (14) sont disposés à l'intérieur du bâti d'attelage (3) et/ou de l'élément de support (10).

15. Machine agricole selon l'une des deux revendications précédentes, dans laquelle le bâti d'attelage (3) comporte une ouverture de passage en forme de fente, à travers laquelle passe le levier pivotant du dispositif de centrage (14), de telle sorte que le point d'articulation supérieur (9) du levier pivotant (15) est situé en dehors du bâti d'attelage (3), et l'axe de pivotement (16) du levier de centrage et la surface de centrage (17) du levier pivotant (15) sont situés dans le volume intérieur du bâti d'attelage (3).
